(19) **Europäisches Patentamt European Patent Office Office européen des brevets**

(11) **EP 3 974 277 B1**

(12) **EUROPEAN PATENT SPECIFICATION**

(45) Date of publication and mention of the grant of the patent:
**10.05.2023   Bulletin 2023/19**

(21) Application number: **21190505.4**

(22) Date of filing: **10.08.2021**

(51) International Patent Classification (IPC):
**B60W 60/00** *(2020.01)*      **B60W 30/18** *(2012.01)*
**B60W 30/16** *(2020.01)*      **B60W 30/12** *(2020.01)*

(52) Cooperative Patent Classification (CPC):
**B60W 60/007; B60W 30/12; B60W 30/16; B60W 30/18163; B60W 60/0053;** B60W 2520/10; B60W 2552/10; B60W 2552/53; B60W 2554/802

(54) **DRIVING CONTROL APPARATUS FOR VEHICLE**

ANTRIEBSSTEUERUNGSVORRICHTUNG FÜR FAHRZEUG

APPAREIL DE CONTRÔLE DE CONDUITE POUR VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **24.09.2020   JP 2020160059**

(43) Date of publication of application:
**30.03.2022   Bulletin 2022/13**

(73) Proprietor: **Suzuki Motor Corporation Shizuoka 432-8611 (JP)**

(72) Inventor: **SATO, Katsuhiko Shizuoka, 432-8611 (JP)**

(74) Representative: **Henkel & Partner mbB Patentanwaltskanzlei, Rechtsanwaltskanzlei Maximiliansplatz 21 80333 München (DE)**

(56) References cited:
**DE-A1-102018 210 410      US-A1- 2015 345 964 US-A1- 2020 189 598**

**EP 3 974 277 B1**

**Description**

[Technical Field]

The present invention relates to driving control apparatuses for vehicles, and more particularly, relates to an emergency evacuation (driving the vehicle to a road shoulder), a minimal risk maneuver, when a driver cannot take over operation when failure occurs in partially automated in-lane driving systems or in partially automated lane change systems.

[Background Art]

A variety of techniques for reducing burdens on drivers and for safe-driving support, for example, the practical application and international standardization of a "partially automated in-lane driving system (PADS)" and a "partially automated lane change system (PALS)" are being promoted.

If a system failure occurs or if driving conditions of a vehicle deviate from system limits, such a driving control system notifies a driver of an operation takeover request and shifts to manual operation by the driver, but if the operation is not taken over by the driver due to the driver dozing off, being distracted, being ill, or the like, it shifts to a minimal risk maneuver (MRM) such as emergency evacuation.

For example, Patent Literature 1 discloses, at a time of driving change to unplanned manual driving due to failure, deterioration, or the like of a peripheral monitoring sensor used for automated driving, switching the mode of driving change in accordance with the driver's state detected by a driver status monitor and immediately stopping without the operation takeover request.

[Citation List]

[Patent Literature]

[Patent Literature 1] JP 2018-180594 A
Additional background state of the art is shown in US 2015 345 964 A1, DE 10 2018 210 410 A1 and US 2020 189 598 A1. Especially, US 2015 345 964 A1 discloses an evacuation travelling assistance apparatus, wherein a risk determining unit determines, when a driver is not in a state capable of appropriately performing driving operations, a risk involved in stopping at a location and a risk involved in passing through the location, for each of a plurality of locations that may serve as an advancing destination of the own vehicle, based on map information, own vehicle information, and peripheral environment information. The risk determining unit evaluates, for each of the plurality of locations, at least one evaluation subject among a plurality of evaluation subject including: a risk occurrence frequency at the location; a risk avoidability at the location; and a level of danger of the risk occurring at the location, based on a plurality of levels, and determines the risk involved in stopping at each location and the risk involved in passing through each location, based on evaluation results.

[Summary of Invention]

[Problem to be Solved by the Invention]

However, immediate stop and sudden deceleration for that purpose may affect surrounding traffic flow, such as sudden approach of a following vehicle, so road shoulder evacuation using an automated driving function is preferable.

The present invention has been made in view of the above-described actual situation, and an object is to make it possible to smoothly and promptly execute emergency evacuation in the case in which a driver cannot take over operation when a failure occurs.

[Means for Solving the Problems]

In order to solve the above-described problems, the present invention is
a driving control apparatus for a vehicle, including:

an environmental condition estimating part including a surrounding recognition function for recognizing a vehicle's driving lane, neighboring lanes, and other vehicles driving in the driving lanes and a function for obtaining the vehicle's moving state;
a path generating part for generating a target path on the basis of information obtained by the environmental condition estimating part; and

a vehicle control part configured to perform speed control and steering control for making the vehicle follow the target path,
wherein the driving control apparatus having:

a function for performing automated in-lane driving by maintaining a set vehicle speed when there is no preceding other vehicle in the vehicle's driving lane, and maintaining a set inter-vehicle distance when there is a preceding other vehicle;
a function for performing automated lane change to a neighboring lane when there is no other vehicle in a predetermined area of the neighboring lane; and
a function for evacuating the vehicle to a road shoulder when a driver cannot take over operation when a failure occurs during operation of the functions,
characterized in that the driving control apparatus is configured to, in a case in which the vehicle is driving in a lane other than a first lane neighboring the road shoulder at operation of the function for evacuating, perform automated lane change to the first lane, and prior thereto, set a predetermined area serving as a criterion of the lane change to the first lane to a second predetermined area smaller than the predetermined area; and,
in a case in which the vehicle is driving in the first lane neighboring the road shoulder at operation of the function for evacuating, or in a case in which automated lane change to the first lane is performed during operation of the function for evacuating and the vehicle is driving in the first lane, prior to evacuation to the road shoulder, set a predetermined area serving as a criterion of evacuation to the road shoulder to a third predetermined area smaller than the second predetermined area.

[Advantageous Effects of Invention]

As described above, according to the driving control apparatus for the vehicle according to the present invention, because when the vehicle is driving in a lane other than the first lane adjacent to the road shoulder at the time of the evacuation function operation, automated lane change to the first lane from automated in-lane driving maintaining the set inter-vehicle distance or the set vehicle speed in the first lane is performed, sudden proximity to a following vehicle due to a sudden decrease in vehicle speed is prevented, and because of the maintained vehicle speed, prompt lane change in accordance with traffic flow becomes possible compared with immediate deceleration.

In addition, since the predetermined area serving as a criterion for lane change is set to the second predetermined area smaller than that at a normal time, prior to the lane change to the first lane, opportunities for lane change to the first lane are increased and shift to lane change becomes easy, time driving in lanes other than the first lane is shortened, and as a result, prompt deceleration and stopping is expected.

Furthermore, in the case in which the vehicle is driving in the first lane at the time of the evacuation function operation, or in the case in which automated lane change is performed due to operation of the evacuation function and the vehicle is driving in the first lane, prior to evacuation to the road shoulder, the predetermined area serving as the criterion of road shoulder evacuation is set to the third predetermined area even smaller than the second predetermined area, so a start condition of road shoulder movement is relaxed, and an impact on the surrounding traffic flow is reduced, which is advantageous for prompt road shoulder evacuation.

[Brief Description of Drawings]

[Figure 1] Figure 1 is a schematic view showing a driving control system of a vehicle.
[Figure 2] Figure 2 is a schematic plan view showing an external sensor group of the vehicle.
[Figure 3] Figure 3 is a block diagram showing the driving control system of the vehicle.
[Figure 4] Figure 4 is a flowchart showing emergency evacuation control of an embodiment of the present invention.
[Figure 5] Figure 5 is a schematic plan view showing an outline of emergency evacuation control of the embodiment of the present invention.

[Mode for Carrying Out the Invention]

Hereinafter, an embodiment of the present invention will be described in detail with reference to the drawings.

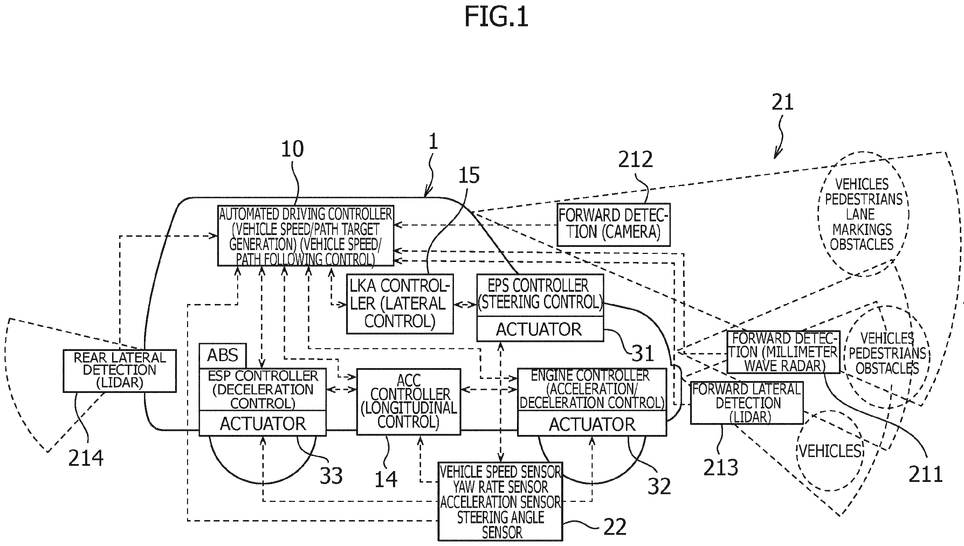

In Figure 1, a vehicle 1 equipped with a driving control system according to the present invention includes, in addition to common components, such as an engine and a vehicle body, of an automobile, an external sensor 21 for detecting a vehicle surrounding environment, an internal sensor 22 for detecting vehicle information, a controller/actuator group for speed control and steering control, an ACC controller 14 for inter-vehicle distance control, an LKA controller 15 for lane keeping support control, and an automated driving controller 10 for controlling them and executing partially automated in-lane driving (PADS) and automated lane change (PALS) in order to perform, at the vehicle side, recognition, determination, and operation conventionally performed by a driver.

The controller/actuator group for speed control and steering control includes an EPS (Electric Power Steering) controller 31 for steering control, an engine controller 32 for acceleration/deceleration control, and an ESP/ABS controller 33. An ESP (registered trademark; Electronic Stability Program) includes an ABS (Antilock Brake System) to form a stability control system (vehicle behavior stabilization control system).

The external sensor 21 is composed of a plurality of detection means for inputting lane markings on a road defining the vehicle's own driving lane and the neighboring lane, and presence of and relative distance from other vehicles, obstacles, people, and the like around the vehicle into the automated driving controller 10 as image data or point cloud data.

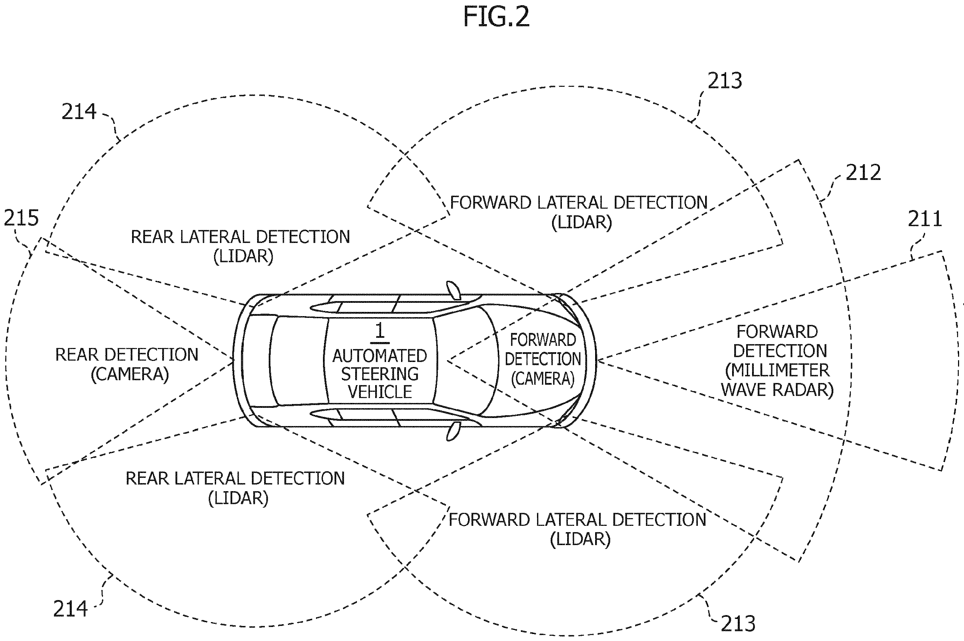

For example, as shown in Figure 2, the vehicle 1 includes a millimeter wave radar (211) and a camera (212) as forward detection means 211 and 212, LIDARs (Laser Imaging Detection And Ranging) as front lateral direction detection means 213 and rear lateral direction detection means 214, and a camera (back camera) as rearward detection means 215, covers 360 degrees around the vehicle, and can detect positions of and distance from vehicles, obstacles and the like, and lane marking positions of the vehicle's driving lane and neighboring lanes within a predetermined range in the front, rear, left, and right directions of the vehicle.

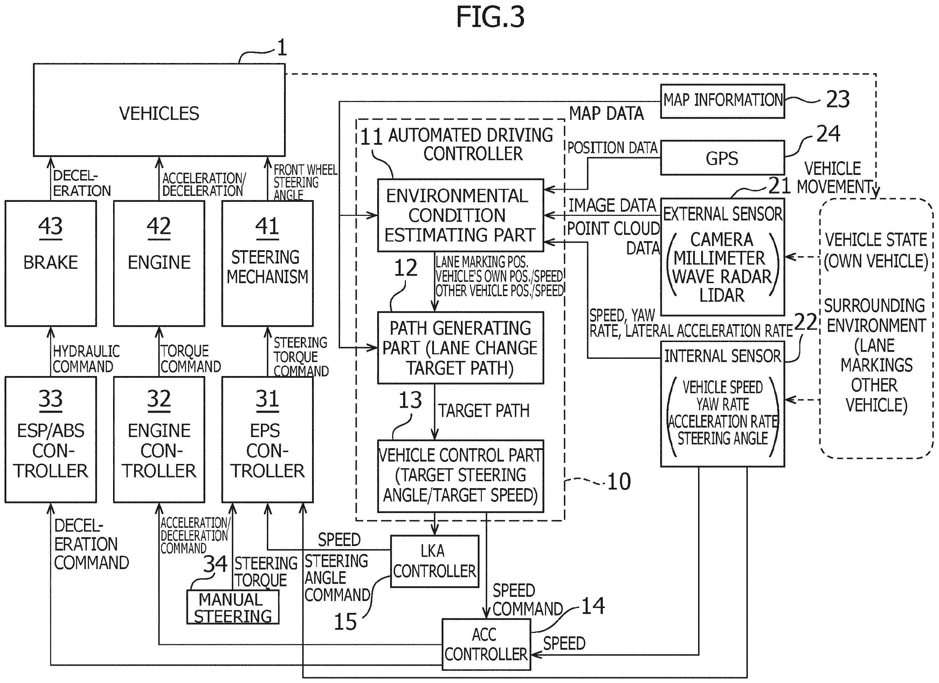

The internal sensor 22 is composed of a plurality of detection means, such as a vehicle speed sensor, a yaw rate sensor and an acceleration sensor, for measuring physical quantities representing the movement state of the vehicle, and their measurement values are input into the automated driving controller 10, ACC controller 14, LKA controller 15, and EPS controller 31 as shown in Figure 3, and undergo arithmetic processing together with an input from the external sensor 21.

The automated driving controller 10 includes an environmental condition estimating part 11, a path generating part 12 and a vehicle control part 13, and includes a computer for performing functions as described below, that is, a ROM storing programs and data, a CPU for performing arithmetic processing, a RAM for reading out the programs and data, and storing dynamic data and arithmetic processing results, an input/output interface, and the like.

The environmental condition estimating part 11 acquires the absolute position of the vehicle itself by matching the vehicle's own position information by positioning means 24 such as a GPS and map information 23, and on the basis of external data such as the image data and point cloud data obtained by the external sensor 21, estimates positions of lane markings of the vehicle's own driving lane and the neighboring lane, and positions and speeds of other vehicles. In addition, it acquires the movement state of the vehicle itself from internal data measured by the internal sensor 22.

The path generating part 12 generates a target path from the vehicle's own position estimated by the environmental condition estimating part 11 to an arrival target. It generates a target path from the vehicle's own position to an arrival target point in lane change on the basis of the positions of the lane markings of the neighboring lane, the positions and speeds of the other vehicles, and the movement state of the vehicle itself estimated by the environmental condition estimating part 11.

The vehicle control part 13 calculates a target speed and a target steering angle on the basis of the target path generated by the path generating part 12, transmits a speed command for constant speed cruise or inter-vehicle distance keeping and following cruise to the ACC controller 14, and transmits a steering angle command for path following to the EPS controller 31 via the LKA controller 15.

The vehicle speed is also input into the EPS controller 31 and ACC controller 14. Because a steering torque changes according to the vehicle speed, the EPS controller 31 refers to a steering angle-steering torque map for each vehicle speed and transmits a torque command to a steering mechanism 41. The engine controller 32, ESP/ABS controller 33, and EPS controller 31 control an engine 42, a brake 43, and the steering mechanism 41, and thereby control movement of the vehicle 1 in a longitudinal direction and a lateral direction.

(Outline of Partially Automated In-Lane Driving System)

Next, partially automated in-lane driving (PADS driving) by a partially automated in-lane driving system (PADS) is enabled in a state in which both ACC controller 14 included in an adaptive cruise control system (ACCS) and LKA controller 15 included in a lane keeping assistance system (LKAS) are operating together with the automated driving controller 10.

At the same time as operation of the partially automated in-lane driving system, the automated driving controller 10 (path generating part 12) generates a target path within a single lane and a target speed on the basis of the external information (lanes, vehicle position, and positions and speeds of other vehicles driving in the lane and neighboring lane) obtained by the environmental condition estimating part 11 through the external sensor 21, and the internal information (vehicle speed, yaw rate, and acceleration) obtained by the internal sensor 22.

The automated driving controller 10 (vehicle control part 13) estimates the speed, attitude, and lateral displacement of the vehicle after $\Delta t$ seconds from a relationship between a yaw rate $\gamma$ and lateral acceleration $(d^2y/dt^2)$ occurring due to vehicle movement by the vehicle's own position and movement characteristics of the vehicle itself, that is, a front wheel steering angle $\delta$ occurring when a steering torque T is applied to the steering mechanism 41 during traveling at a vehicle speed V, gives a steering angle command that makes the lateral displacement to "yt" after $\Delta t$ seconds to the EPS controller 31 via the LKA controller 15, and gives a speed command that makes the speed "Vt" after $\Delta t$ seconds to the ACC controller 14.

Although the ACC controller 14, LKA controller 15, EPS controller 31, engine controller 32, and ESP/ABS controller 33 operate independently of automatic steering, they are also operable according to command input from the automated driving controller 10 while a partially automated in-lane driving function (PADS) and a partially automated lane change system (PALS) are operating.

The ESP/ABS controller 33 that has received a deceleration command from the ACC controller 14 issues a hydraulic command to an actuator and controls braking force of the brake 43 to control the vehicle speed. In addition, an engine controller 32 that has received an acceleration/deceleration command from the ACC controller 14 controls an actuator output (degree of throttle opening) to give the engine 42 a torque command and controls driving force to control the vehicle speed.

The ACC function (ACCS) functions with combination of hardware and software, such as the millimeter wave radar as the forward detection means 211 included in the external sensor 21, ACC controller 14, engine controller 32, and ESP/ABS controller 33 and the like.

That is, in a case in which there is no vehicle ahead, the ACC function performs constant speed cruise by setting ACC set speed (set speed) as the target speed; and in a case of having caught up with the vehicle ahead (in a case in which a speed of the vehicle ahead is slower than ACC set speed), the ACC function performs following cruise following the vehicle ahead while maintaining an inter-vehicle distance (set inter-vehicle distance) corresponding to a time gap (inter-vehicle time = inter-vehicle distance / speed of vehicle) set in accordance with the speed of the vehicle ahead.

The LKA function (LKAS) detects the lane markings and the vehicle's own position by the environmental condition estimating part 11 of the automated driving controller 10 on the basis of image data obtained by the external sensor 21 (cameras 212 and 215), and performs steering control by the EPS controller 31 via the LKA controller 15 so as to be able to drive at a lane center.

That is, the EPS controller 31 that has received the steering angle command from the LKA controller 15 refers to a vehicle speed-steering angle-steering torque map, issues a torque command to an actuator (EPS motor), and gives a front wheel steering angle targeted by the steering mechanism 41.

The partially automated in-lane driving function (PADS) is implemented by combining longitudinal control (speed control and inter-vehicle distance control) by the ACC controller 14 and lateral control (steering control and lane keeping driving control) by the LKA controller 15 as described above.

(Outline of Partially Automated Lane Change System)

Next, an outline of the partially automated lane change system (PALS) will be explained on the assumption of lane change from a state of partially automated in-lane driving (PADS driving) on a highway with two or more lanes on one side with a median.

The partially automated lane change system (PALS) is a system that automatically performs lane change by determination of the system itself or the driver's instructions or approval, and is implemented by combining longitudinal control (speed control and inter-vehicle distance control) and lateral control (target path following control by automatic steering) by the automated driving controller 10.

At the same time as operation of the partially automated lane change system, the automated driving controller 10 (path generating part 12) constantly generates a target path for changing lanes from a currently driving lane to a neighboring lane on the basis of the external information (lane markings of the lane and neighboring lane, and positions and speeds of other vehicles driving in the lane and neighboring lane) obtained by the environmental condition estimating part 11 through the external sensor 21, and the internal information (vehicle speed, yaw rate, and acceleration) obtained by the internal sensor 22.

The automated lane change target path is a path that leads to a state of driving at the center of the neighboring lane by performing lane change from the current driving lane, regarding other vehicles driving in the neighboring lane, their future positions and speeds are predicted, and automated lane change is executed by automatic steering by determination of the system in which it is determined that there is no other vehicle in a front predetermined area ZF, a rear predetermined area ZR, and a lateral predetermined area ZL of the neighboring lane set according to speed of the vehicle.

The front predetermined area ZF and rear predetermined area ZR correspond to inter-vehicle distance that should be secured from another vehicle in front of and at the back of the vehicle, that is, front predetermined distance XF and rear predetermined distance XR, and they are calculated by the following expressions, respectively.

$$\text{Front predetermined distance (XF)} = \text{inter-vehicle distance (S)} + \text{vehicle head time (TH)} \times \text{speed of the vehicle (V)},$$

where

$$\text{inter-vehicle distance (S)} = \text{speed of the vehicle (V)} \times \text{inter-vehicle time (TG)};$$

$$\text{vehicle head time (TH)} = \text{vehicle head distance} / V = TTC \times \Delta V / V;$$

$$TTC = \Delta V / \text{maximum deceleration of the vehicle } (D_{max});$$

and

$$\Delta V = V - Vf,$$

where Vf denotes speed of the vehicle ahead.

$$\text{Rear predetermined distance (XR)} = \text{vehicle head time (TH)} \times \text{speed of vehicle behind (Vr)},$$

where,

$$\text{vehicle head time (TH)} = \text{vehicle head distance} / V = TTC \times \Delta V / V;$$

$$TTC = \Delta V / \text{deceleration of vehicle behind (Dr)};$$

and

$$\Delta V = Vr - V,$$

where Vr denotes speed of the vehicle behind.

As is clear from the above, since the front predetermined distance (XF) and rear predetermined distance (XR) vary depending on the speeds V, Vf, and Vr of the vehicle, vehicle ahead, and vehicle behind, respectively, a lookup table storing calculated values for each of the speed of the vehicle (V) and relative speed ($\Delta$V) for each is prepared, and corresponding values are applied by a reference process.

The front predetermined area ZF is an area defined by the longitudinal direction: the front predetermined distance XF $\times$ the lateral direction: width of the driving lane + width of the neighboring lane, and the rear predetermined area ZR is an area defined by the longitudinal direction: the rear predetermined distance XR $\times$ the lateral direction: width of the driving lane + width of the neighboring lane. In addition, the lateral predetermined area ZL is an area defined by the longitudinal direction: vehicle length $\times$ the lateral direction: width of the neighboring lane.

(Lane Change Continuation Determination during Automated Lane Change)

As described above, in the state in which the vehicle surrounding environment and target path are confirmed and an automated lane change possible flag is set, automated lane change is executed by the determination of the system (or the driver's approval), but there is also a possibility that the surrounding environment may change due to behavior of another vehicle during a period from starting lane change after making a blinker blink to moving to the neighboring lane.

Therefore, also during automated lane change, monitoring of the periphery of the vehicle is continued by external information obtained by the environmental condition estimating part 11 through the external sensor 21, and if intrusion (interruption) of another vehicle into the front predetermined area ZF, rear predetermined area ZR, or lateral predetermined area ZL is confirmed, the automated driving controller 10 determines whether lane change should be continued or cancelled on the basis of the vehicle's own position during lane change.

If it is determined that lane change cannot be continued and lane change is cancelled, the automated driving controller 10 (path generating part 12) changes the following target to the center line of the lane (original lane) in which the vehicle was driving before lane change to regenerate a target path and vehicle speed, and the vehicle control part 13 gives a steering angle command to the EPS controller 31 and a speed command to the ACC controller 14 for making the vehicle follow the regenerated target path, and thereby, the vehicle returns to the original lane by automatic steering (automated lane return function).

Even if intrusion (interruption) of another vehicle into the front predetermined area ZF, rear predetermined area ZR, or lateral predetermined area ZL is confirmed, when the vehicle has almost moved to the neighboring lane, for example, when three or more of the four wheels have entered the neighboring lane, crossing the lane marking, lane change is not cancelled and lane change continues.

On the other hand, if it is determined that continuation of lane change is difficult, an operation takeover request is notified, automated lane change is cancelled, and authority is transferred to the driver. When the driver takes over, the operation shifts to manual driving, but when the driver cannot take over, the minimal risk maneuver (MRM) is activated.

(Minimal Risk Maneuver at Operation Takeover Failure)

The minimal risk maneuver (MRM) indicates a function for automatically shifting to a minimal risk condition when the driver cannot takeover operation, although the driver is notified of a takeover request due to a change in the external driving environment as described above and occurrence of failure or the like in a system, and specifically, control for evacuation to a road shoulder or the like and deceleration and stop by automatic steering and braking is performed. Note that even when the MRM is in operation, if the driver performs brake operation or steering operation, that is, if the driver is able to take over operation, the MRM is overridden and the operation shifts to manual driving.

In the partially automated lane change system (PALS), if some kind of system failure, such as abnormality of a part of the sensors included in the system, occurs, there is a possibility that automated lane change as designed cannot be performed, and therefore, also in such a case, the driver is notified of an operation takeover request (takeover request) and authority is transferred, but when the driver cannot take over, the minimal risk maneuver (MRM) is activated.

As described-above, the external sensor 21 is composed of the plurality of sensors, and the automated driving controller 10 is redundantly designed to be able to perform the minimal risk maneuver (MRM) by other sensors and detection means even if abnormality occurs in any sensor or detection means.

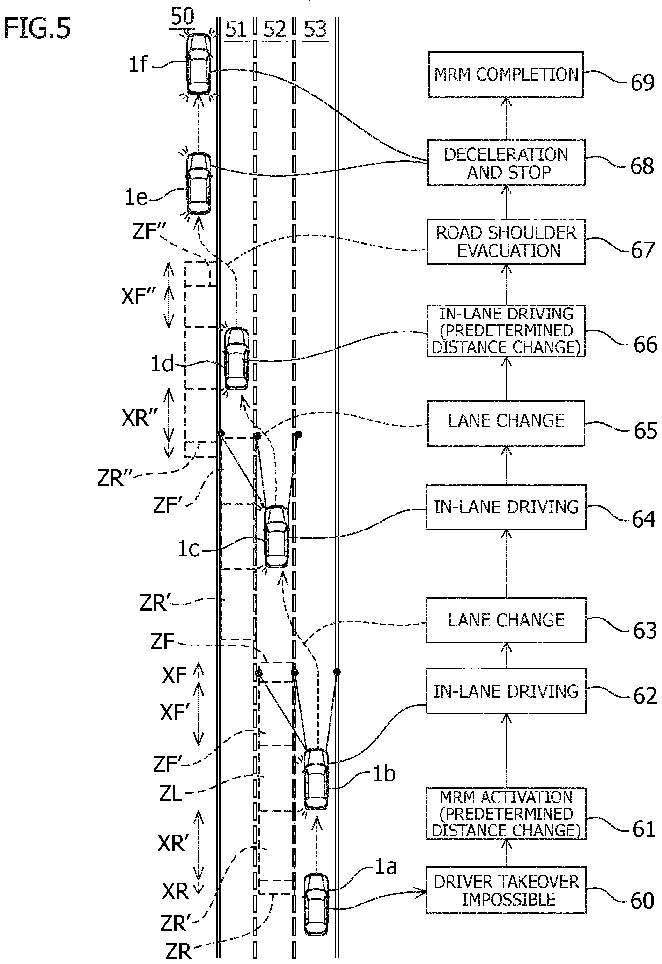

Figure 5 shows movements (1a-1f) of a vehicle 1 when the MRM is activated in the vehicle 1 driving in a third lane 53 on a three-lane highway on one side. Basically, the MRM is composed of four functions of in-lane driving (62, 64, and 66), lane change (63 and 65), road shoulder evacuation (67), and deceleration and stop (68), and when road shoulder evacuation is performed by the MRM during driving in a lane other than the first lane 51 on a two-or-more-lane road on one side, the vehicle requires control that needs at least one lane change to a neighboring lane from in-lane driving, road shoulder evacuation (movement to a road edge), and deceleration and stop.

Therefore, as shown in Figure 5, in the vehicle 1 (1a) driving in the third lane 53, when the driver cannot take over (60) and the MRM is activated (61), there needs to be control for making two lane changes (63 and 65) and in-lane driving (64 and 66), evacuating to the road shoulder (67), and decelerating and stopping (68). However, as already described, there is a problem as follows.

(Problem of Minimal Risk Maneuver)

For example, when the MRM is activated in the vehicle 1 (1a) driving in the third lane 53, first, a driving lane determination is made, and a transition to lane change from in-lane driving to the second lane 52 is made, but when there is a following vehicle, if the vehicle 1 immediately shifts to deceleration control (for example, from a set speed of 80 km/h to 50 km/h) during in-lane driving, the following vehicle may approach rapidly.

Lane change by the MRM can be performed when no other vehicle is in the front predetermined area ZF and the rear predetermined area ZR, and for example, in a case in which there is a following vehicle in the neighboring second lane 52, when shift to deceleration control is immediately performed and the following vehicle approaches and enters the rear predetermined area ZR, the lane change to the second lane 52 cannot be performed, lane change along the traffic flow cannot be performed, and time required to complete the MRM may become longer.

On the other hand, in a case of moving from the first lane 51 to the road shoulder 50, since the situation is different from during driving in other lanes, such as vehicle speed is low after shifting to deceleration control and there is no other vehicle on the road shoulder 50 in principle, if road shoulder evacuation is performed based on the normal lane change criterion as described above, time to road shoulder evacuation may become longer and an impact on the surrounding traffic flow may become larger.

(Improved Minimal Risk Maneuver at Operation Takeover Failure)

The automated driving controller 10 according to the present invention executes the minimum risk maneuver (MRM) including the following control.

(1) Speed Control (Longitudinal Control)

When the vehicle is driving in a lane (52 or 53) other than the first lane when the MRM is activated, ACC driving continues until the vehicle moves to the first lane 51 after the MRM activation. That is, when there is a preceding vehicle, the vehicle follows the preceding vehicle while maintaining the set inter-vehicle distance (inter-vehicle time), whereas when there is no preceding vehicle, the vehicle performs lane change (63 and 65) to move to the first lane 51 while maintaining and driving at the set speed (ACC set speed), then changes the set speed (ACC set speed) to a low speed, for example, the minimum speed (50 km/h) of the highway, decelerates to that speed, evacuates to the road shoulder 50, and then decelerates and stops.

(2) Lane Change Criterion Change

When the vehicle is driving in a lane (52 or 53) other than the first lane when the MRM is activated, the predetermined areas serving as the lane change criterion are changed to predetermined areas (second) ZF' and ZR' (front predetermined distance XF' and rear predetermined distance XR') at the MRM activation smaller than the predetermined areas (first) ZF and ZR (front predetermined distance XF and rear predetermined distance XR) at the normal driving time, and a lane change possible condition is relaxed.

The predetermined areas (front predetermined distance XF' and rear predetermined distance XR') applied to the lane change determination at the MRM activation are set, for example, as follows.

$$\text{Front predetermined distance (XF')} = \text{minimum inter-vehicle distance (S}_0) + \text{vehicle head time (TH)} \times \text{speed of the vehicle (V)},$$

where, minimum inter-vehicle distance ($S_0$) = speed of the vehicle (V) $\times$ inter-vehicle time (TG'); and inter-vehicle time (TG') = minimum inter-vehicle time ($TG_{min}$), or

$$TG > TG' > TG_{min}.$$

$$\text{Rear predetermined distance (XR')} = \text{vehicle head time (TH')} \times \text{speed of vehicle behind (Vr),}$$

where, vehicle head time (TH') = vehicle head distance / V = TTC' $\times$ $\Delta$V / V;
TTC' = $\Delta$V / vehicle behind maximum deceleration ($Dr_{max}$), or
TTC' = $\Delta$V / vehicle behind deceleration (Dr'), Dr < Dr' < $Dr_{max}$.

That is, the predetermined areas (second) ZF' and ZR' (front predetermined distance XF' and rear predetermined distance XR') at the MRM activation are selected from ranges that are smaller than the predetermined areas (first) ZF and ZR (front predetermined distance XF and rear predetermined distance XR) at the normal time and equal to or larger than minimum predetermined areas (minimum front predetermined distance and minimum rear predetermined distance), respectively.

Since the front predetermined distance XF' and rear predetermined distance XR' that define the predetermined areas at the MRM activation also vary depending on the vehicle speeds V, Vf, and Vr of the vehicle, vehicle ahead, and vehicle behind, respectively, a lookup table for the specific section storing calculated values for each of the speed of the vehicle (V) and relative speed (ΔV) for each is prepared, and corresponding values are applied by a reference process.

(3) Change of Road Shoulder Movement Criterion

When the vehicle is driving in the first lane (51) when the MRM is activated, or when the vehicle is driving in the first lane (51) due to lane change associated with the activation of the MRM, the predetermined areas serving as the lane change criterion are changed to predetermined areas (third) ZF" and ZR" (front predetermined distance XF" and rear predetermined distance XR") at the road shoulder movement even smaller than the predetermined areas (second) ZF' and ZR' (front predetermined distance XF' and rear predetermined distance XR') at the lane change, and a road shoulder movement possible condition is further relaxed.

The predetermined areas (third) ZF" and ZR" (front predetermined distance XF" and rear predetermined distance XR") applied to the road shoulder movement determination are set, for example, as follows.

Front predetermined distance (XF") = minimum inter-vehicle distance (S₀) + vehicle

head time (TH) × speed of the vehicle (V),

where, minimum inter-vehicle distance (S₀) = speed of the vehicle (V) × inter-vehicle time (TG"); and
inter-vehicle time (TG") = minimum inter-vehicle time (TG$_{min}$) × k (k is a coefficient less than 1), or

$$TG > TG' > TG''.$$

Rear predetermined distance (XR") = vehicle head time (TH") × speed of vehicle

behind (Vr),

where, vehicle head time (TH") = vehicle head distance / V = TTC" × ΔV / V;
TTC" = ΔV / vehicle behind maximum deceleration (Dr$_{max}$), or
TTC" = ΔV / vehicle behind deceleration (Dr'), Dr < Dr" < Dr$_{max}$.

That is, the predetermined areas (third) (front predetermined distance XF" and rear predetermined distance XR") at the road shoulder movement are selected from ranges that are smaller than the predetermined areas (second) (front predetermined distance XF' and rear predetermined distance XR') at the MRM activation and also smaller than the minimum predetermined areas (minimum front predetermined distance and minimum rear predetermined distance), respectively.

For also each of the front predetermined distance XF" and rear predetermined distance XR" that define the predetermined areas at the road shoulder movement, a lookup table for the specific section storing calculated values for each of the speed of the vehicle (V) and relative speed (ΔV) is prepared, and corresponding values are applied by a reference process.

When a target of the front predetermined distance XF" defining the front predetermined area at the road shoulder movement is a stationary object (such as an obstacle or a stopped vehicle), the front predetermined distance XF" is separately set as stop distance (idle running distance until movement start + braking distance) from the vehicle speed (road shoulder evacuation start speed).

(MRM Activation Flow at Operation Takeover Failure)

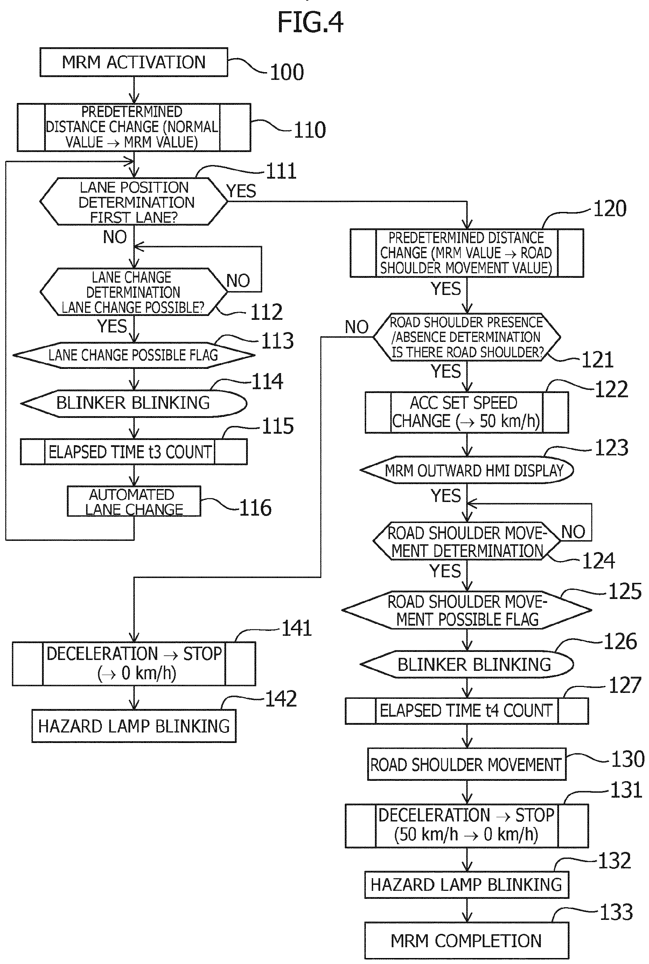

Next, an MRM activation flow (Figure 4) at the time of driving takeover failure when a system failure occurs during PALS driving on the highway will be described.

(1) MRM Activation

In Figure 4, if it is determined that a system failure has occurred during PADS (ACCS and LKAS) driving by the partially automated in-lane driving system on a highway with three or more lanes on one side, the driver is notified of PALS driving function stop and operation authority transfer (takeover request) by a head-up display, an information display part in a meter panel, or voice, and if the driver takes over operation within a predetermined time (for example, ten seconds), the operation is shifted to manual driving, but if the operation is not taken over, an alarm is issued by voice or display, and if the operation is not taken over within an elapsed time (for example, four seconds), it is determined that the driver has not taken over and the MRM is activated (step 100).

(2) Change of Lane Change Determination Reference Value

When the MRM is activated, the front and rear predetermined distances (predetermined areas) serving as the lane change criterion are changed from the predetermined areas (first) ZF and ZR (front predetermined distance XF and rear predetermined distance XR) at the normal driving time to the predetermined areas (second) ZF' and ZR' (front predetermined distance XF' and rear predetermined distance XR') at the MRM activation smaller than those at the normal driving time (step 110).

(3) Lane Position Determination

It is determined whether the lane position the vehicle is driving is the first driving lane 51 neighboring the road shoulder 50 (step 111). That is, the environmental condition estimating part 11 determines whether the lane in which the vehicle is driving is the first lane 51 from presence or absence of a neighboring lane, type of lane marking, or the like on the basis of matching between own vehicle position information by the positioning means 24 and the map information 23 and data obtained by the external sensor 21.

(4) Lane Change Flow

When the vehicle is driving in a lane (52 or 53) other than the first lane, since lane change to the first lane 51 is required prior to road shoulder evacuation, a lane change flow is performed as follows.

(4-1) Lane Change Determination

It is determined whether left lane change can be performed on the basis of whether there is another vehicle in the left front predetermined area ZF' (front predetermined distance XF') or left rear predetermined area ZR' (rear predetermined distance XR') changed in step 110 (step 112). If lane change cannot be performed, ACC driving is continued in the same driving lane.

(4-2) Lane Change Execution

If it is determined that lane change can be performed, a lane change possible flag is set (step 113), and at the same time, blinking of a left blinker is started (step 114). A blinker blinking time t3 (for example, three seconds) is counted (step 115), and after the elapse of the blinker blinking time t3, left lane change by the automated lane change function is performed (step 116).

(5) Road Shoulder Movement Flow

If the vehicle is determined to be driving in the first lane 51 in step 111, or if the vehicle is determined to be driving in the first lane 51 in step 111 after execution of the lane change flow of above steps 112-116, the operation moves to a road shoulder movement flow.

(5-1) Change of Lane Change Determination Reference Value

If the vehicle is determined to be driving in the first lane 51, first, the predetermined areas (second) ZF' and ZR' (front predetermined distance XF' and rear predetermined distance XR') serving as the lane change criterion set in step 110 are changed to the predetermined areas (third) ZF" and ZR" (front predetermined distance XF" and rear predetermined distance XR") for road shoulder movement determination even smaller than those (step 120).

(5-2) Road Shoulder Presence/Absence Determination

Next, it is determined whether there is an evacuation space on the road shoulder 50 (step 121). That is, the environmental condition estimating part 11 determines whether there is an evacuation space on the road shoulder 50 by matching between the vehicle position information by the positioning means 24 and the map information 23, and sensing of a left area of a left lane marking of the vehicle based on image data or point cloud data obtained by the external sensor 21.

(5-3) ACC Set Speed Change

If it is determined to be possible to evacuate to the road shoulder 50 in step 121, the ACC set speed is changed to a lower speed, for example, the minimum speed of the highway (50 km/h) for preparation for road shoulder evacuation, and deceleration is started (step 122). On the other hand, if it is determined that there is no evacuation space in step 121, the target speed is changed to 0 km/h (step 141), hazard lamps are made to blink, and the vehicle decelerates and stops in the first lane (step 142).

(5-4) MRM Outward HMI Display

At the same time as deceleration start, surrounding vehicles are notified that the vehicle is decelerating by the MRM by an outward HMI or the like (step 123).

(5-5) Road Shoulder Movement Determination

It is determined whether the vehicle can move to the road shoulder by sensing presence or absence of an obstacle (a mobile object such as an emergency vehicle or a stationary object such as a stopped vehicle) in the front and rear predetermined areas (third) ZF" and ZR" (front predetermined distance XF" and rear predetermined distance XR") on the road shoulder 50 (step 124).

(5-6) Road Shoulder Movement Possible Flag

If the vehicle is determined to be able to move in step 124, a road shoulder movement possible flag is set (step 125). On the other hand, if the vehicle is determined to be unable to move due to the presence of a mobile object in the front and rear predetermined areas (third) ZF" and ZR" in step 124, the vehicle waits in the first lane 51 and continues the road shoulder movement determination.

(5-7) Blinker Blinking

Blinking of the left blinker is started at the same time as the road shoulder movement possible flag (step 126), and a blinker blinking time t4 (for example, three seconds) is counted (step 127).

(5-8) Road Shoulder Movement

After the elapse of the blinker blinking time t4, movement to the road shoulder 50 is performed by the automatic steering function (step 130), after road shoulder movement completion, the target speed is changed to 0 km/h, the vehicle decelerates and stops (step 131), and hazard lamps are made to blink after stopping (step 132).

(6) MRM Completion

The MRM is completed with vehicle speed zero and blinking hazard lamps (step 133).

(Other Examples)

In the above examples, when the vehicle is determined, in the first lane 51, to be able to evacuate to the road shoulder 50, the ACC set speed is changed to a lower speed (evacuation start speed), but when there is no following vehicle in the rear predetermined distance at the MRM activation, even if the position of the vehicle itself may be in the second lane 52 or the third lane 53, the ACC set speed may be set to a lower speed (evacuation start speed) and deceleration may be started.

When there is no following vehicle in the rear predetermined distance at the MRM activation and the own vehicle position is in the third lane 53, the vehicle may be decelerated in stages. That is, first, the vehicle changes from the ACC set speed at the MRM activation to a speed (evacuation preparation speed) between the ACC set speed and the evacuation start speed, decelerates to that speed to perform lane change to the second lane 52, then sets the ACC set speed to the evacuation start speed to start deceleration, and thereby can swiftly decelerate at a small deceleration rate.

In the above examples, the case in which the hazard lamps are made to blink after deceleration and stop in road shoulder evacuation is described, but if there is no following vehicle in the rear predetermined distance when the vehicle is driving in the first lane 51, blinking of the hazard lamps may be started at that time point.

In the example shown in Figure 5, the case in which the road shoulder 50 is on the left side of the multi-lane road (51-53) is described, but assuming that the road shoulder exists on the right side of a multi-lane road, such as an urban expressway, the predetermined areas (front predetermined distance XF' and rear predetermined distance XR') at the lane change and the predetermined areas (front predetermined distance XF" and rear predetermined distance XR") at the road shoulder movement can be also set in both left and right directions.

(Operation and Effects)

As detailed above, according to the driving control device for a vehicle according to the present invention, in the vehicle equipped with the partially automated lane change system (PALS), at a time of system failure occurrence, when a driver cannot take over due to the driver dozing off, being ill, being distracted, or the like, and shift to the MRM is performed,

(i) if the vehicle is driving in a lane (52 or 53) other than the first lane neighboring the road shoulder, ACC driving maintaining (vehicle speed maintaining) the set inter-vehicle distance or the set vehicle speed is continued, and the maintained vehicle speed makes prompt lane change along the traffic flow possible, and

(ii) since the predetermined areas serving as the lane change criterion are changed to the second predetermined areas (ZF' and ZR') smaller than at a normal time, opportunities of lane change to the first lane 51 increase (decrease in the number of cases in which it is determined that the lane change cannot be performed and waiting or cancellation occurs (deceleration and stop in the lane)), it becomes easy to shift to lane change, a time driving in the second and third lanes (52 and 53) is shortened, and as a result, prompt deceleration and stop is expected.

In addition, at the shift to the MRM as described above, (iii) in the case in which the vehicle is driving in the first lane (51) neighboring the road shoulder (or in the case in which lane change to the first lane is performed and the vehicle is driving in the first lane (51) neighboring the road shoulder), the predetermined areas are changed to the predetermined areas (front predetermined distance XF" and rear predetermined distance XR") at the road shoulder movement even smaller than the predetermined areas (front predetermined distance XF' and rear predetermined distance XR') at the lane change described above, so the start condition of the road shoulder movement (50) is relaxed, thereby the number of cases in which the vehicle is waiting for road shoulder movement (the vehicle during MRM driving stays in the driving lane) is reduced, an impact on the surrounding traffic flow is reduced, and realization of prompt road shoulder evacuation can be expected.

[Reference Signs List]

10 Automated driving controller
11 Environmental condition estimating part
12 Path generating part
13 Vehicle control part
14 ACC controller
15 LKA controller
21 External sensor
22 Internal sensor
31 EPS controller
32 Engine controller
33 ESP/ABS controller
34 Manual steering (steering wheel)

**Claims**

1. A driving control apparatus (10) for a vehicle (1), comprising:

an environmental condition estimating part (11) including a surrounding recognition function (21) for recognizing a vehicle's driving lane, neighboring lanes, and other vehicles driving in the driving lanes and a function (22) for obtaining the vehicle's moving state;
a path generating part (12) for generating a target path on the basis of information obtained by the environmental condition estimating part (11); and
a vehicle control part (13) configured to perform speed control and steering control for making the vehicle (1) follow the target path,
wherein the driving control apparatus (10) comprises:

a function for performing automated in-lane driving by maintaining a set vehicle speed when there is no preceding other vehicle in the vehicle's driving lane, and maintaining a set inter-vehicle distance when there is a preceding other vehicle;
a function for performing automated lane change to a neighboring lane when there is no other vehicle in a predetermined area (ZF, ZR, ZL) of the neighboring lane; and
a function for evacuating the vehicle to a road shoulder (50) when a driver cannot take over operation when a failure occurs during operation of the functions,
wherein the driving control apparatus is configured to, in a case in which the vehicle (1) is driving in a lane (52, 53) other than a first lane (51) neighboring the road shoulder (50) at operation of the function for evacuating, perform automated lane change to the first lane (51), and
prior thereto, set a predetermined area (ZF, ZR, ZL) serving as a criterion of the lane change to the first lane (51) to a second predetermined area (ZF', ZR", ZL) smaller than the predetermined area (ZF, ZR, ZL); and,
in a case in which the vehicle (1) is driving in the first lane (51) neighboring the road shoulder (50) at operation of the function for evacuating, or in a case in which automated lane change to the first lane (51) is performed during operation of the function for evacuating and the vehicle (1) is driving in the first lane (51), prior to evacuation to the road shoulder (50), set a predetermined area (ZF", ZR", ZL) serving as a criterion of evacuation to the road shoulder (50) to a third predetermined area (ZF", ZR", ZL) smaller than the second predetermined area (ZF', ZR', ZL).

2. The driving control apparatus (10) for the vehicle (1) as claimed in claim 1, wherein in the case in which the vehicle (1) is driving in the first lane (51) neighboring the road shoulder (50) at operation of the function for evacuating, or in the case in which automated lane change to the first lane (51) is performed during operation of the function for evacuating and the vehicle (1) is driving in the first lane (51), the set vehicle speed is changed to an evacuation speed lower than the set vehicle speed, and after deceleration to the evacuation speed, the predetermined area (ZF, ZR, ZL) serving as the criterion of evacuation to the road shoulder (50) is set to the third predetermined area (ZF", ZR", ZL).

**Patentansprüche**

1. Ein Fahrsteuerungsgerät (10) für ein Fahrzeug (1) umfassend:

ein Umgebungsbedingungsschätzerteil (11) mit einer Umgebungserkennungsfunktion (21), um die Fahrspur des Fahrzeugs, benachbarte Fahrspuren und andere Fahrzeuge, die in den Fahrspuren fahren, zu erkennen, sowie einer Funktion (22) zur Bestimmung des Fahrzeug-Bewegungszustands;
ein Pfadgeneratorteil (12), das auf der Grundlage der von dem Umgebungsbedingungsschätzerteil (11) erhaltenen Informationen einen Zielpfad erzeugt; und
ein Fahrzeugsteuerungteil (13), das ausgestaltet ist, um Geschwindigkeitssteuerung und Lenksteuerung auszuführen, um das Fahrzeug (1) auf dem Zielpfad zu führen; wobei
das Fahrsteuerungsgerät (10) umfasst:

eine Funktion zur Durchführung eines automatisierten In-Fahrspur-Fahrens durch Aufrechterhaltung einer eingestellten Fahrzeuggeschwindigkeit, wenn kein anderes vorausfahrendes Fahrzeug auf der Fahrspur des Fahrzeugs ist, und durch Aufrechterhaltung eines eingestellten Zwichen-Fahrzeug-Abstands, wenn ein anderes vorausfahrendes Fahrzeug vorhanden ist;

eine Funktion zur Durchführung eines automatisierten Spurwechsels zu einer benachbarten Fahrspur, wenn sich in einem vordefinierten Bereich (ZF, ZR, ZL) der benachbarten Fahrspur kein anderes Fahrzeug befindet; und

eine Funktion zur Evakuierung des Fahrzeugs auf eine seitenstreifen (50), wenn ein Fahrer während des Betriebs der Funktionen den Betrieb nicht übernehmen kann; wobei

das Fahrsteuerungsgerät (10) weiter ausgestaltet ist, um im Falle, dass das Fahrzeug (1) während des Betriebs der Funktion zur Evakuierung auf einer Fahrspur (52, 53) fährt, die nicht die erste Fahrspur (51) ist, die an den Seitenstreifen (50) angrenzt, einen automatisierten Spurwechsel zur ersten Fahrspur (51) durchführt; und

vorher einen vordefinierten Bereich (ZF, ZR, ZL), der als Kriterium für den Spurwechsel zur ersten Fahrspur (51) dient, auf einen zweiten vordefinierten Bereich (ZF', ZR', ZL') festlegt, der kleiner als der vorherige Bereich (ZF, ZR, ZL) ist; und

um im Falle, dass das Fahrzeug (1) während des Betriebs der Funktion zur Evakuierung auf der ersten Fahrspur (51) fährt, die an den Seitenstreifen (50) angrenzt, oder wenn ein automatisierter Spurwechsel zur ersten Fahrspur (51) während des Betriebs der Funktion zur Evakuierung durchgeführt wird und das Fahrzeug (1) auf der ersten Fahrspur (51) fährt, vor der Evakuierung auf den Seitenstreifen (50) einen vordefinierten Bereich (ZF", ZR", ZL"), der als Kriterium für die Evakuierung auf den Seitenstreife dient, auf einen dritten vordefinierten Bereich festzusetzen, der kleiner als der zweite vordefinierte Bereich (ZF', ZR', ZL') ist.

2. Das Fahrsteuerungsgerät (10) für das Fahrzeug (1) nach Anspruch 1, wobei in dem Fall, in dem das Fahrzeug (1) beim Ausführen der Funktion zur Evakuierung auf der ersten Spur (51) neben dem Seitenstreifen (50) fährt, oder in dem Fall, in dem während des Betriebs der Funktion zur Evakuierung ein automatisierter Spurwechsel auf die erste Spur (51) durchgeführt wird und das Fahrzeug (1) auf der ersten Spur (51) fährt, die eingestellte Fahrzeuggeschwindigkeit auf eine Evakuierungsgeschwindigkeit geändert wird, die niedriger als die eingestellte Fahrzeuggeschwindigkeit ist, und nach der Verzögerung auf die Evakuierungsgeschwindigkeit der vorbestimmte Bereich (ZF, ZR, ZL), der als das Kriterium der Evakuierung auf den Seitenstreifen (50) dient, auf den dritten vorbestimmten Bereich (ZF', ZR', ZL') eingestellt wird.

**Revendications**

1. Appareil de commande de conduite (10) pour un véhicule (1), comprenant :

une partie d'estimation de conditions environnementales (11) incluant une fonction de reconnaissance périphérique (21) destinée à reconnaître la voie de circulation d'un véhicule, les voies voisines et d'autres véhicules circulant sur les voies de circulation, et une fonction (22) destinée à obtenir l'état de déplacement du véhicule ;

une partie de génération de trajet (12) destinée à générer un trajet cible sur la base d'informations obtenues par la partie d'estimation de conditions environnementales (11) ; et

une partie de commande de véhicule (13) configurée de manière à mettre en oeuvre une commande de vitesse et une commande de direction afin d'amener le véhicule (1) à suivre le trajet cible ;

dans lequel l'appareil de commande de conduite (10) comprend :

une fonction destinée à mettre en oeuvre une conduite automatisée à l'intérieur de la voie, en maintenant une vitesse de véhicule définie, en l'absence d'un autre véhicule précédent sur la voie de circulation du véhicule, et en maintenant une distance définie entre les véhicules en présence d'un autre véhicule précédent ;

une fonction destinée à mettre en oeuvre un changement de voie automatisé vers une voie voisine, en l'absence d'un autre véhicule dans une zone prédéterminée (ZF, ZR, ZL) de la voie voisine ; et

une fonction destinée à évacuer le véhicule vers un accotement (50) lorsqu'un conducteur n'est pas en mesure de prendre le contrôle de l'opération lorsqu'une défaillance se produit pendant l'opération des fonctions ;

dans lequel l'appareil de commande de conduite est configuré de manière à, dans un cas où le véhicule (1) circule dans une voie (52, 53) distincte d'une première voie (51) voisine de l'accotement (50) lors de l'opération de la fonction d'évacuation, mettre en oeuvre un changement de voie automatisé vers la première voie (51) ; et

avant cela, définir une zone prédéterminée (ZF, ZR, ZL), servant de critère du changement de voie vers la première voie (51), sur une deuxième zone prédéterminée (ZF', ZR', ZL) plus petite que la zone prédéterminée (ZF, ZR, ZL) ; et

dans un cas où le véhicule (1) circule sur la première voie (51) voisine de l'accotement (50) lors de l'opération de la fonction d'évacuation, ou dans un cas où un changement de voie automatisé vers la première voie (51) est mis en oeuvre pendant l'opération de la fonction d'évacuation tandis que le véhicule (1) circule sur la première voie (51), avant l'évacuation vers l'accotement (50), définir une zone prédéterminée (ZF", ZR", ZL) servant de critère d'évacuation vers l'accotement (50), sur une troisième zone prédéterminée (ZF", ZR", ZL) plus petite que la deuxième zone prédéterminée (ZF', ZR', ZL).

2. Appareil de commande de conduite (10) pour le véhicule (1) selon la revendication 1, dans lequel, dans le cas où le véhicule (1) circule sur la première voie (51) voisine de l'accotement (50) lors de l'opération de la fonction d'évacuation, ou dans le cas où un changement de voie automatisé vers la première voie (51) est mis en oeuvre pendant l'opération de la fonction d'évacuation tandis que le véhicule (1) circule sur la première voie (51), la vitesse de véhicule définie est modifiée en une vitesse d'évacuation inférieure à la vitesse de véhicule définie, et après décélération jusqu'à la vitesse d'évacuation, la zone prédéterminée (ZF, ZR, ZL) servant de critère d'évacuation vers l'accotement (50) est définie sur la troisième zone prédéterminée (ZF", ZR", ZL).

**FIG.1**

# FIG.2

FORWARD LATERAL DETECTION (LIDAR) — 213

REAR LATERAL DETECTION (LIDAR) — 214

215

REAR DETECTION (CAMERA)

1
AUTOMATED STEERING VEHICLE

FORWARD DETECTION (CAMERA)

FORWARD DETECTION (MILLIMETER WAVE RADAR) — 212 / 211

REAR LATERAL DETECTION (LIDAR) — 214

FORWARD LATERAL DETECTION (LIDAR) — 213

EP 3 974 277 B1

# FIG.3

VEHICLES — **1**

MAP INFORMATION — 23

MAP DATA

**11** AUTOMATED DRIVING CONTROLLER

POSITION DATA | GPS — 24

VEHICLE MOVEMENT

**21**

DECEL-ERATION

ACCELERATION/DECELERATION

FRONT WHEEL STEERING ANGLE

ENVIRONMENTAL CONDITION ESTIMATING PART

IMAGE DATA

POINT CLOUD DATA

EXTERNAL SENSOR

( CAMERA MILLIMETER WAVE RADAR LIDAR )

VEHICLE STATE (OWN VEHICLE)

**43** BRAKE

**42** ENGINE

**41** STEERING MECHANISM

**12**

LANE MARKING POS. VEHICLE'S OWN POS./SPEED OTHER VEHICLE POS./SPEED

PATH GENERATING PART (LANE CHANGE TARGET PATH)

SPEED, YAW RATE, LATERAL ACCELERATION RATE **22**

INTERNAL SENSOR

SURROUNDING ENVIRONMENT (LANE MARKINGS OTHER VEHICLE)

HYDRAULIC COMMAND

TORQUE COMMAND

STEERING TORQUE COMMAND

**13** TARGET PATH

( VEHICLE SPEED YAW RATE ACCELERATION RATE STEERING ANGLE )

**33** ESP/ABS CON-TROLLER

**32** ENGINE CON-TROLLER

**31** EPS CON-TROLLER

VEHICLE CONTROL PART (TARGET STEERING ANGLE/TARGET SPEED)

**10**

DECEL-ERATION COMMAND

ACCELERATION/DECELERATION COMMAND

SPEED

LKA CONTROLLER

**34** STEERING TORQUE

STEERING ANGLE COMMAND

SPEED COMMAND — 14

MANUAL STEERING

**15**

ACC CONTROLLER

SPEED

EP 3 974 277 B1

18

# FIG.4

MRM ACTIVATION — 100

PREDETERMINED DISTANCE CHANGE (NORMAL VALUE → MRM VALUE) — 110

— 111

LANE POSITION DETERMINATION FIRST LANE?  — YES

NO

LANE CHANGE DETERMINATION LANE CHANGE POSSIBLE? — NO

— 112

YES

LANE CHANGE POSSIBLE FLAG — 113

BLINKER BLINKING — 114

— 115

ELAPSED TIME t3 COUNT

AUTOMATED LANE CHANGE — 116

PREDETERMINED DISTANCE CHANGE (MRM VALUE → ROAD SHOULDER MOVEMENT VALUE) — 120

YES

ROAD SHOULDER PRESENCE /ABSENCE DETERMINATION IS THERE ROAD SHOULDER? — NO

— 121

YES

ACC SET SPEED CHANGE (→ 50 km/h) — 122

— 123

MRM OUTWARD HMI DISPLAY

YES

ROAD SHOULDER MOVE-MENT DETERMINATION — NO

— 124

YES

ROAD SHOULDER MOVE-MENT POSSIBLE FLAG — 125

— 126

BLINKER BLINKING

ELAPSED TIME t4 COUNT — 127

ROAD SHOULDER MOVEMENT — 130

DECELERATION → STOP (50 km/h → 0 km/h) — 131

HAZARD LAMP BLINKING — 132

MRM COMPLETION — 133

DECELERATION → STOP (→ 0 km/h) — 141

HAZARD LAMP BLINKING — 142

FIG.5

EP 3 974 277 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018180594 A
- US 2015345964 A1
- DE 102018210410 A1
- US 2020189598 A1